(19) Europäisches Patentamt / European Patent Office / Office européen des brevets

(11) **EP 2 423 878 A1**

(12) **EUROPEAN PATENT APPLICATION**
published in accordance with Art. 153(4) EPC

(43) Date of publication:
    **29.02.2012 Bulletin 2012/09**

(51) Int Cl.:
    ***G06T 7/20*** (2006.01)

(21) Application number: **10766658.8**

(22) Date of filing: **23.04.2010**

(86) International application number:
    **PCT/CN2010/072150**

(87) International publication number:
    **WO 2010/121568 (28.10.2010 Gazette 2010/43)**

(84) Designated Contracting States:
    **AT BE BG CH CY CZ DE DK EE ES FI FR GB GR
    HR HU IE IS IT LI LT LU LV MC MK MT NL NO PL
    PT RO SE SI SK SM TR**

(30) Priority: **24.04.2009 CN 200910137360**

(71) Applicant: **Sony Corporation
    Tokyo 108-0075 (JP)**

(72) Inventors:
    • **LI, Liang
      Haidian District
      Beijing 100190 (CN)**
    • **WU, Weiguo
      Haidian District
      Beijing 100190 (CN)**

(74) Representative: **Turner, James Arthur et al
    D Young & Co LLP
    120 Holborn
    London EC1N 2DY (GB)**

(54) **METHOD AND DEVICE FOR TRAINING, METHOD AND DEVICE FOR ESTIMATING POSTURE VISUAL ANGLE OF OBJECT IN IMAGE**

(57) Method and device for estimating the posture orientation of the object in image are described. According to the method, an image feature of the image is obtained. With respect to each of a plurality of orientation classes, 3-D object posture information corresponding to the image feature is obtained based on a mapping model corresponding to the orientation class, for mapping the image feature to the 3-D object posture information. A joint probability of a joint feature including the image feature and the corresponding 3-D object posture information for each of the orientation classes is calculated according to a joint probability distribution model based on single probability distribution models for the orientation classes. A conditional probability of the image feature in condition of the corresponding 3-D object posture information is calculated based on the joint probability for each of the orientation classes. The orientation class corresponding to the maximum of the conditional probabilities is estimated as the posture orientation of the object in the image.

Fig. 1

**Description**

**Technical Field**

The present invention relates to object posture estimation, and especially to a training method and a training apparatus for purpose of object posture orientation estimation, and a method and an apparatus for estimating the posture orientation of an object in an image.

**Background**

Methods of estimating the posture of an object (e.g., human, animal, object or the like) in a single image may be divided into model based and learning based according to their technical principles. According to the learning based methods, three dimensional (3-D) postures of objects are directly deduced from image features. An often used image feature is object outline information.

Posture orientations of objects are not distinguished in the existing methods for object posture estimation. Because of complexity of object posture variation, different posture orientations of objects may bring about further ambiguity in the estimation. Therefore, accuracy of image posture estimation under different orientations is far lower than that of the posture estimation under one orientation.

**Summary**

In view of the above deficiencies of the prior art, the present invention is intended to provide a method and an apparatus for training based on input images, and a method and an apparatus for estimating a posture orientation of an object in an image, to facilitate distinguishing object posture orientations in the object posture estimation.

An embodiment of the present invention is a method of training based on input images, including: extracting an image feature from each of a plurality of input images each having an orientation class; with respect to each of a plurality of orientation classes, estimating a mapping model for transforming image features extracted from input images of the orientation class into 3-D object posture information corresponding to the input images through a linear regression analysis; and calculating a joint probability distribution model based on samples obtained by connecting the image features with their corresponding 3-D object posture information, wherein single probability distribution models which the joint probability distribution model is based on correspond to different orientation classes, and each of the single probability distribution models is based on samples including the image features extracted from the input images of a corresponding orientation class.

Another embodiment of the present invention is an apparatus for training based on input images, including: An extracting unit which extracts an image feature from each of a plurality of input images each having an orientation class; a map estimating unit which, with respect to each of a plurality of orientation classes, estimates a mapping model for transforming image features extracted from input images of the orientation class into 3-D object posture information corresponding to the input images through a linear regression analysis; and a probability model calculating unit which calculates a joint probability distribution model based on samples obtained by connecting the image features with their corresponding 3-D object posture information, wherein single probability distribution models which the joint probability distribution model is based on correspond to different orientation classes, and each of the single probability distribution models is based on samples including the image features extracted from the input images of a corresponding orientation class.

According to the embodiments of the present invention, the input images have the respective orientation classes. It is possible to extract an image feature from each input image. Based on the orientation class, it is possible to estimate the mapping model through the linear regression analysis. Such mapping model acts as a function for converting image features of the orientation class to the corresponding 3-D object posture information. It is possible to connect the image feature with the corresponding 3-D object posture information to obtain a sample, so as to calculate the joint probability distribution model based on these samples. The joint probability distribution model is based on a number of single probability distribution models, where each orientation class has one single probability distribution model. Based on the samples including image features of the respective orientation class, it is possible to obtain a corresponding single probability distribution model. Therefore, according to the embodiments of the present invention, it is possible to train a model for object posture orientation estimation, that is, the mapping model and the joint probability distribution model for the posture orientations.

Further, in the embodiments, it is possible to calculate a feature transformation model for reducing dimensions of the image features with a dimension reduction method. Accordingly, it is possible to transform the image features by using the feature transformation model, for use in estimating the mapping model and calculating the joint probability distribution model. The image feature transformed through the feature transformation model may have a smaller number of dimensions, facilitating the reduction of subsequent processing cost for estimation and calculation.

Another embodiment of the present invention is a method of estimating a posture orientation of an object in an image, including: Extracting an image feature from an input image; with respect to each of a plurality of orientation classes, obtaining 3-D object posture information corresponding to the image feature based on a mapping model corresponding to the orientation class, for mapping the image feature to the 3-D object posture information; calculating a joint probability of a joint feature including the image feature and the corresponding 3-D object posture information for each of the orientation classes according to a joint probability distribution model based on single probability distribution models for the orientation classes; calculating a conditional probability of the image feature in condition of the corresponding 3-D object posture information based on the joint probability; and estimating the orientation class corresponding to the maximum of the conditional probabilities as the posture orientation of the object in the input image.

Another embodiment of the present invention is an apparatus for estimating a posture orientation of an object in an image, including: an extracting unit which extracts an image feature from an input image; a mapping unit which, with respect to each of a plurality of orientation classes, obtains 3-D object posture information corresponding to the image feature based on a mapping model corresponding to the orientation class, for mapping the image feature to the 3-D object posture information; a probability calculating unit which calculates a joint probability of a joint feature including the image feature and the corresponding 3-D object posture information for each of the orientation classes according to a joint probability distribution model based on single probability distribution models for the orientation classes, and calculates a conditional probability of the image feature in condition of the corresponding 3-D object posture information based on the joint probability; and an estimating unit which estimates the orientation class corresponding to the maximum of the conditional probabilities as the posture orientation of the object in the input image.

According to the embodiments of the present invention, it is possible to extract an image feature from the input image. Because each orientation class has a corresponding mapping model for converting the image feature of the orientation class to 3-D object posture information, it is possible to assume that the image feature has the orientation classes respectively, so as to obtain the 3-D object posture information corresponding to the image feature by using the corresponding mapping model. According to the joint probability distribution model, it is possible to calculate joint probabilities that the image feature and the corresponding 3-D object posture information occur in the assumption of the orientation classes respectively. According to the joint probabilities, it is possible to calculate conditional probabilities that the image feature occurs in condition that the corresponding 3-D object posture information occurs. It can be seen that, the orientation class assumption corresponding to the maximum conditional probability may be estimated as the posture orientation of the object in the input image. Therefore, according to the embodiments of the present invention, it is possible to estimate the object posture orientation.

Further, in the embodiments, it is possible to transform the image feature with a feature transformation model for dimension reduction to obtain the 3-D object posture information. The image feature transformed through the feature transformation model may have a smaller number of dimensions, facilitating the reduction of subsequent processing cost for mapping and probability calculation.

Posture orientations of objects are not distinguished in the existing methods for object posture estimation. Because of complexity of object posture variation, different posture orientations of objects may bring about great ambiguity in the estimation. Therefore, accuracy of image posture estimation under different orientations is far lower than that of the posture estimation under one orientation. An object of the present invention is to estimate the orientation of objects in images and videos, so as to further estimate the object posture under a single orientation. According to experimental results, the present invention can estimate the posture of objects in images and videos effectively.

**Brief Description of Drawings**

The above and/or other aspects, features and/or advantages of the present invention will be easily appreciated in view of the following description by referring to the accompanying drawings. In the accompanying drawings, identical or corresponding technical features or components will be represented with identical or corresponding reference numbers.

Fig. 1 is a block diagram illustrating the structure of an apparatus for training based on input images according to an embodiment of the present invention.

Fig. 2 is a schematic diagram for illustrating a scheme of extracting blocks from an input image.

Fig. 3 is a flow chart illustrating a method of training based on input images according to an embodiment of the present invention.

Fig. 4 is a block diagram illustrating the structure of an apparatus for training based on input images according to a preferable embodiment of the present invention.

Fig. 5 is a flow chart illustrating a method of training based on input images according to a preferable embodiment of the present invention.

Fig. 6 is a block diagram illustrating the structure of an apparatus for estimating the posture orientation of an object in an image according to an embodiment of the present invention.

Fig. 7 is a flow chart illustrating a method of estimating the posture orientation of an object in an image according to an embodiment of the present invention.

Fig. 8 is a block diagram illustrating the structure of an apparatus for estimating the posture orientation of an object in an image according to a preferable embodiment of the present invention.

Fig. 9 is a flow chart illustrating a method of estimating the posture orientation of an object in an image according to a preferable embodiment of the present invention.

Fig. 10 is a block diagram showing the exemplary structure of a computer for implementing the embodiments of the present invention.

**Detailed Description**

The embodiments of the present invention are below described by referring to the drawings. It is to be noted that, for purpose of clarity, representations and descriptions about those components and processes known by those skilled in the art but unrelated to the present invention are omitted in the drawings and the description.

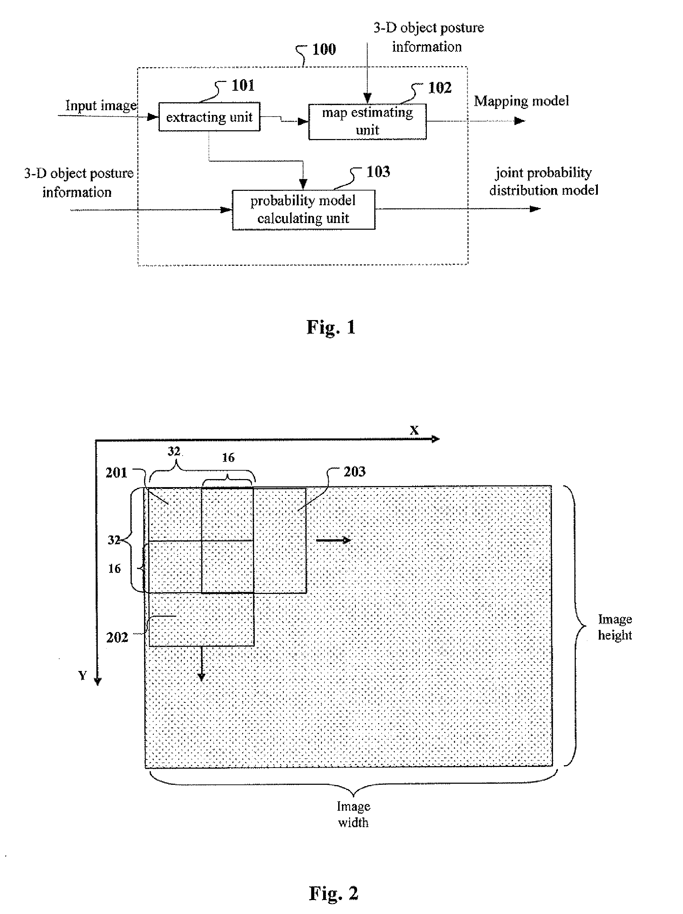

Fig. 1 is a block diagram illustrating the structure of an apparatus 100 for training based on input images according to an embodiment of the present invention.

As illustrated in Fig. 1, the apparatus 100 includes an extracting unit 101, a map estimating unit 102 and a probability model calculating unit 103.

The input images are those including objects having various posture orientation classes. The posture orientation classes represent different orientations assumed by the objects respectively. For example, the posture orientation classes may include -80°, -40°, 0°, +40° and +80°, where -80° is a posture orientation class representing that the object turns to right by 80 degree relative to the lens of the camera, -40° is a posture orientation class representing that the object turns to right by 40 degree relative to the lens of the camera, 0° is a posture orientation class representing that the object faces to the lens of the camera, +40° is a posture orientation class representing that the object turns to left by 40 degree relative to the lens of the camera, and +80° is a posture orientation class representing that the object turns to left by 80 degree relative to the lens of the camera.

Of course, the posture orientation classes may also represent orientation ranges. For example, the 180° range from the orientation in which the object faces to the left side to the orientation in which the object faces to the right side is divided into 5 orientation ranges: [-90°, -54°], [-54°, -18°], [-18°, 18°], [18°, 54°], [54°, 90°], that is, 5 posture orientation classes.

The number of the posture orientation classes and specific posture orientations represented by the classes may be set arbitrarily as required, and are not limited to the above example.

In an embodiment of the present invention, the input images and the corresponding posture orientation classes are supplied to the apparatus 100.

Preferably, the input images include object images containing no background but with various posture orientations, and object images containing background and with various posture orientations.

The extracting unit 101 extracts an image feature from each of a plurality of input images each having an orientation class. The image feature may be various features for object posture estimation. Preferably, the image feature is a statistical feature relating to edge directions in the input images, for example, gradient orientation histogram (HOG) feature and scale invariant feature transform SIFT feature.

In a specific example, it is assumed that the gradient orientation histogram feature is adopted as the image feature, and the input images have the same width and the same height (120 pixels $\times$ 100 pixels). However, the embodiments of the present invention are not limited to the assumed specific feature and size.

In this example, the extracting unit 101 may calculate gradients in the horizontal direction and in the vertical direction for each pixel in the input images, that is,

$$\text{Horizontal gradient: } I_x(x, y) = d(I(x, y))/dx = I(x+1, y) - I(x-1, y)$$

$$\text{Vertical gradient: } I_y(x, y) = d(I(x, y))/dy = I(x, y+1) - I(x, y-1)$$

where $I(x, y)$ represents the grey scale value of a pixel, $x$ and $y$ respectively represent coordinates of the pixel in the horizontal direction and the vertical direction.

Then, the extracting unit 101 may calculate the gradient orientation and the gradient intensity of each pixel in the input images according to gradients in the horizontal direction and in the vertical direction for the pixel.

$$\text{Gradient orientation: } \theta(x, y) = argtg(|I_y / I_x|)$$

$$\text{Gradient intensity: } Grad(x, y) = \sqrt{I_x^2 + I_y^2}$$

where the range of the gradient orientation $\theta(x, y)$ is [0, $\pi$].

In this example, the extracting unit 101 may extract 24 blocks of size 32 × 32 one by one from left to right and from top to bottom, where there are 6 blocks in each row of the horizontal direction, and there are 4 blocks in each column of the vertical direction. Any two blocks adjacent in the horizontal direction or the vertical direction overlap with each other by one-half of them.

Fig. 2 is a schematic diagram for illustrating a scheme of extracting blocks from an input image. Fig. 2 illustrates three blocks 201, 202 and 203 of size 32 × 32. The block 202 overlaps with the block 201 in the vertical direction by 16 pixels, and the block 203 overlaps with the block 201 in the horizontal direction by 16 pixels.

The extracting unit 101 may divide each 32 × 32 block into 16 small blocks of size 8 × 8, where there are 4 small blocks in each row of the horizontal direction, and there are 4 small blocks in each column of the vertical direction. The small blocks are arranged in the horizontal direction and then in the vertical direction.

For each small block of 8 × 8, the extracting unit 101 calculates a gradient orientation histogram for 64 pixels in the small block, where the gradient orientations are divided into 8 direction bins, that is, every $\pi/8$ in the range from 0 to $\pi$ may be one direction bin. That is to say, for each of the 8 direction bins, a sum of gradient intensities of the pixels having the gradient orientations falling within the direction bin is calculated based on 64 pixels of every small blocks of 8 × 8, thus obtaining an 8-dimension vector. Accordingly, a 128-dimension vector is obtained for each 32 × 32 block.

For each input image, the extracting unit 101 obtains an image feature by connecting the vector of each block in sequence, and therefore the number of dimensions in the image feature is 3072, that is, 128 × 24 = 3072.

It is to be noted that, the embodiments of the present invention is not limited to the division scheme and the specific numbers of the blocks and the small blocks in the above examples, and may also adopt other division schemes and specific numbers. The embodiments of the present invention is not limited to the method of extracting features in the above example, and may also adopt other methods of extracting image features for object posture estimation.

Returning to Fig. 1, with respect to each of the plurality of orientation classes, the map estimating unit 102 estimates a mapping model for converting image features extracted from input images of the orientation class into 3-D object posture information corresponding to the input images through a linear regression analysis. That is to say, for each posture orientation class, it is assumed that there is a certain functional or mapping relation by which the image features extracted from the input images of the posture orientation class can be converted or mapped to the 3-D object posture information corresponding to the input images. Through the linear regression analysis, it is possible to estimate such functional or mapping relation, i.e., mapping model based on the extracted image features and the corresponding 3-D object posture information.

For each input image, 3-D object posture information corresponding to the posture of an object contained in the input image is prepared in advance.

In a specific example, the image feature (feature vector) extracted from an input image is represented as $X_m$, where $m$ is the number of dimensions of the image feature. All the image features extracted from $n$ input images are represented as a matrix $X_{m \times n}$. Further, 3-D object posture information (vector) corresponding to the extracted image feature $X_m$ is represented as $Y_p$, where $p$ is the number of dimensions of the 3-D object posture information. 3-D object posture information corresponding to all the image features extracted from $n$ input images is represented as a matrix $Y_{p \times n}$.

Assuming that $Y_{p \times n} = A_{p \times m} \times X_{m \times n}$, it is possible to calculate $A_{p \times m}$ such that $(Y_{p \times n} - A_{p \times m} \times X_{m \times n})^2$ is minimum through a linear regression analysis, e.g., a least square method. $A_{p \times m}$ is the mapping model.

Returning to Fig. 1, the probability model calculating unit 103 calculates a joint probability distribution model based on samples obtained by connecting the image features with their corresponding 3-D object posture information, wherein single probability distribution models which the joint probability distribution model is based on correspond to different orientation classes, and each of the single probability distribution models is based on samples including the image features extracted from the input images of a corresponding orientation class.

That is to say, the joint probability distribution model is based on the single probability distribution models for different orientation classes. Through a known method, it is possible to calculate a corresponding single probability distribution model (i.e., model parameters) based on a set of samples of each orientation class, and it is also possible to calculate a joint probability distribution model (i.e., model parameters) for the single probability distribution models of all the posture orientation classes.

Suitable joint probability distribution models include, but not limited to, a Gaussian mixture model, a Hidden Markov Model and a Conditional Random Field.

In a specific example, the Gaussian mixture model is adopted. In this example, a joint feature (i.e., sample) $[X, Y]^T$ is formed by an image feature (vector) $X$ and 3-D object posture information (vector) $Y$. It is assumed that the joint feature $[X, Y]^T$ meets a probability distribution equation:

$$p\left(\begin{bmatrix} X \\ Y \end{bmatrix} \middle| \theta \right) = \sum_{i=1}^{M} \rho_i * N(x | u_i, \Sigma_i) ,$$

where $M$ is the number of the posture orientation classes, $N(x|u_i, \Sigma_i)$ is the single Gauss model for posture orientation class $i$, i.e., a normal distribution model. $u_i$ and $\Sigma_i$ are parameters of the normal distribution model, $\rho_i$ represents the weight of the single Gauss model for posture orientation class $i$ in a Gaussian mixture model. It is possible to calculate optimal $\rho_i$, $u_i$ and $\Sigma_i$, $i = 1, ..., M$, i.e., the mapping model through a known estimating method, e.g., an Expectation-Maximization method (EM) based on a set of joint features for all the posture orientation classes.

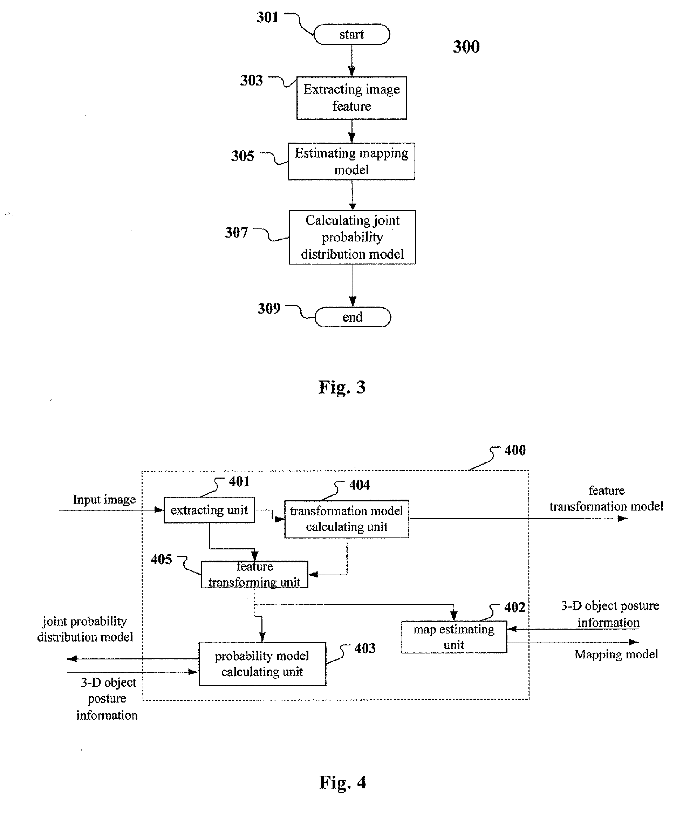

Fig. 3 is a flow chart illustrating a method 300 of training based on input images according to an embodiment of the present invention.

As shown in Fig. 3, the method 300 starts from step 301. At step 303, an image feature is extracted from each of a plurality of input images each having an orientation class. The input images and the posture orientation classes may be that described in the above with reference to the embodiment of Fig. 1. The image feature may be various features for object posture estimation. Preferably, the image feature is a statistical feature relating to edge directions in the input images, for example, gradient orientation histogram (HOG) feature and scale invariant feature transform SIFT feature.

At step 305, with respect to each of the plurality of orientation classes, a mapping model for converting image features extracted from input images of the orientation class into 3-D object posture information corresponding to the input images is estimated through a linear regression analysis. That is to say, for each posture orientation class, it is assumed that there is a certain functional or mapping relation by which the image features extracted from the input images of the posture orientation class can be converted or mapped to the 3-D object posture information corresponding to the input images. Through the linear regression analysis, it is possible to estimate such functional or mapping relation, i.e., mapping model based on the extracted image features and the corresponding 3-D object posture information.

For each input image, 3-D object posture information corresponding to the posture of an object contained in the input image is prepared in advance.

In a specific example, the image feature (feature vector) extracted from an input image is represented as $X_m$, where m is the number of dimensions of the image feature. All the image features extracted from $n$ input images are represented as a matrix $X_{m \times n}$. Further, 3-D object posture information (vector) corresponding to the extracted image feature $X_m$ is represented as $Y_p$, where $p$ is the number of dimensions of the 3-D object posture information. 3-D object posture information corresponding to all the image features extracted from $n$ input images is represented as a matrix $Y_{p \times n}$.

Assuming that $Y_{p \times n} = A_{p \times m} \times X_{m \times n}$, it is possible to calculate $A_{p \times m}$ such that $(Y_{p \times n} - A_{p \times m} \times X_{m \times n})^2$ is minimum through a linear regression analysis, e.g., a least square method. $A_{p \times m}$ is the mapping model. If there are Q orientation classes, Q corresponding mapping models may be generated.

Then at step 307, a joint probability distribution model is calculated based on samples obtained by connecting the image features with their corresponding 3-D object posture information, wherein single probability distribution models which the joint probability distribution model is based on correspond to different orientation classes, and each of the single probability distribution models is based on samples including the image features extracted from the input images of a corresponding orientation class.

That is to say, the joint probability distribution model is based on the single probability distribution models for different orientation classes. Through a known method, it is possible to calculate a corresponding single probability distribution model (i.e., model parameters) based on a set of samples of each orientation class, and it is also possible to calculate a joint probability distribution model (i.e., model parameters) for the single probability distribution models of all the posture orientation classes.

Suitable joint probability distribution models include, but not limited to, a Gaussian mixture model, a Hidden Markov Model and a Conditional Random Field.

In a specific example, the Gaussian mixture model is adopted. In this example, a joint feature (i.e., sample) $[X, Y]^T$ is formed by a image feature (vector) $X$ and 3-D object posture information (vector) $Y$. It is assumed that the joint feature $[X, Y]^T$ meets a probability distribution equation:

$$p\left(\begin{bmatrix} X \\ Y \end{bmatrix}\middle|\theta\right) = \sum_{i=1}^{M} \rho_i * N(x|u_i, \Sigma_i) ,$$

where $M$ is the number of the posture orientation classes, $N(x|u_i,\Sigma_i)$ is the single Gauss model for posture orientation class $i$, i.e., a normal distribution model. $u_i$ and $\Sigma_i$ are parameters of the normal distribution model, $\rho_i$ represents the weight of the single Gauss model for posture orientation class $i$ in a Gaussian mixture model. It is possible to calculate optimal $\rho_i$, $u_i$, and $\Sigma_i$, $i = 1, ..., M$, i.e., the mapping model through a known estimating method, e.g., an Expectation-Maximization method (EM) based on a set of joint features for all the posture orientation classes.

Then the method 300 ends at step 309.

Fig. 4 is a block diagram illustrating the structure of an apparatus 400 for training based on input images according to a preferable embodiment of the present invention.

As illustrated in Fig. 4, the apparatus 400 includes an extracting unit 401, a map estimating unit 402, a probability model calculating unit 403, a transformation model calculating unit 404 and a feature transforming unit 405. The extracting unit 401, the map estimating unit 402 and the probability model calculating unit 403 have the same functions with the extracting unit 101, the map estimating unit 102 and the probability model calculating unit 103 in Fig. 1 respectively, and will not be described in detail here. It is to be noted that, however, the extracting unit 401 is configured to output the extracted image features to the transformation model calculating unit 404 and the feature transforming unit 405, and the image features input into the map estimating unit 402 and the probability model calculating unit 403 are output from the feature transforming unit 405.

The transformation model calculating unit 404 calculates a feature transformation model for reducing dimensions of the image features by using a dimension reduction method. The dimension reduction method comprises, but not limited to, principle component analysis, factor analysis, single value decomposition, multi-dimensional scaling, locally linear embedding, isomap, linear discriminant analysis, local tangent space alignment, and maximum variance unfolding. The obtained feature transformation model may be used to transform the image features extracted by the extracting unit 401 into image features with less dimensions.

In a specific example, the image feature (feature vector) extracted from an input image is represented as $X_m$, where $m$ is the number of dimensions of the image feature. All the image features extracted from n input images are represented as a matrix $X_{m \times n}$. It is possible to calculate a matrix $Map_{d \times m}$ based on the image features $X_{m \times n}$ through the principle component analysis method, where $d < m$.

The feature transforming unit 405 transforms the image features by using the feature transformation model, for use in estimating the mapping model and calculating the joint probability distribution model. For example, in the previous example, it is possible to calculate the transformed image features through the following equation:

$$X'_{d \times n} = Map_{d \times m} \times X_{m \times n}.$$

The transformed image features (the number of dimensions is $d$) are supplied to the map estimating unit 402 and the probability model calculating unit 403.

In the above embodiment, because the image features transformed with the feature transformation model have less dimensions, it is advantageous for reducing subsequent processing cost for estimation and calculation.

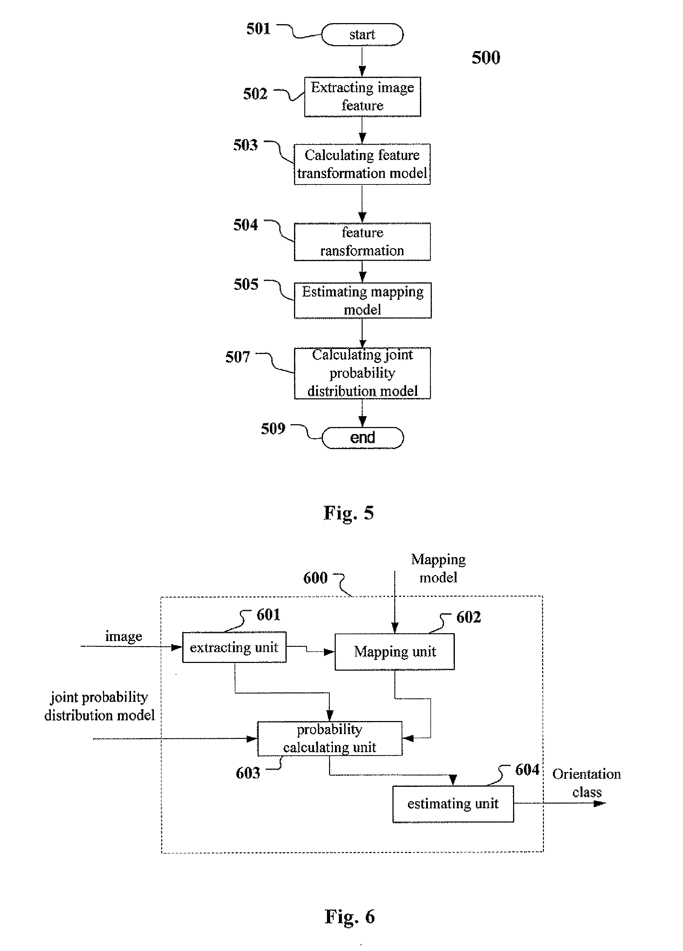

Fig. 5 is a flow chart illustrating a method 500 of training based on input images according to a preferable embodiment of the present invention.

As shown in Fig. 5, the method 500 starts from step 501. At step 502, as in step 303 of the method 300, an image feature is extracted from each of a plurality of input images each having an orientation class.

At step 503, a feature transformation model for reducing dimensions of the image features extracted at step 502 is calculated through a dimension reduction method. The dimension reduction method comprises, but not limited to, principle component analysis, factor analysis, single value decomposition, multi-dimensional scaling, locally linear embedding, isomap, linear discriminant analysis, local tangent space alignment, and maximum variance unfolding. The obtained feature transformation model may be used to transform the extracted image features into image features with less dimensions.

In a specific example, the image feature (feature vector) extracted from an input image is represented as $X_m$, where m is the number of dimensions of the image feature. All the image features extracted from $n$ input images are represented as a matrix $X_{m \times n}$. It is possible to calculate a matrix $Map_{d \times m}$ based on the image features $X_{m \times n}$ through the principle component analysis method, where $d < m$.

At step 504, the image features are transformed by using the feature transformation model, for use in estimating the mapping model and calculating the joint probability distribution model. For example, in the previous example, it is possible to calculate the transformed image features through the following equation:

$$X'_{d \times n} = Map_{d \times m} \times X_{m \times n}.$$

At step 505, as in step 305 of the method 300, with respect to each of the plurality of orientation classes, a mapping model for converting image features (already transformed) extracted from input images of the orientation class into 3-D object posture information corresponding to the input images is estimated through a linear regression analysis.
Then at step 507, as in step 307 of the method 300, a joint probability distribution model is calculated based on samples obtained by connecting the image features (already transformed) with their corresponding 3-D object posture information, wherein single probability distribution models which the joint probability distribution model is based on correspond to different orientation classes, and each of the single probability distribution models is based on samples including the image features extracted from the input images of a corresponding orientation class.
Then the method 500 ends at step 509.
Fig. 6 is a block diagram illustrating the structure of an apparatus 600 for estimating the posture orientation of an object in an image according to an embodiment of the present invention.
As illustrated in Fig. 6, the apparatus 600 includes an extracting unit 601, a mapping unit 602, a probability calculating unit 603 and an estimating unit 604.
The extracting unit 601 extracts an image feature from an input image. The input image has the same specification as that of the input images described in the above with reference to the embodiment of Fig. 1. The image feature and the method of extracting the image feature are the same as the image features and the extracting method (as described in the above with reference to the embodiment of Fig. 1) which the adopted mapping model is based on.
With respect to each of a plurality of orientation classes, the mapping unit 602 obtains 3-D object posture information corresponding to the image feature based on a mapping model corresponding to the orientation class, for mapping the image feature to the 3-D object posture information. The mapping model is that described in the above with reference to the embodiment of Fig. 1. Here, for an image feature $X_m$ extracted from the input image, where $m$ is the number of dimensions of the image feature, the mapping unit 602 assumes that all the orientation classes are possible for the input image. Accordingly, with respect to each assumed orientation class, the mapping unit 602 obtains corresponding 3-D object posture information $Y_{p \times n} = A_{p \times m} \times X_m$ with the corresponding mapping model $A_{p \times m}$.
The probability calculating unit 603 calculates a joint probability of a joint feature including the image feature and the corresponding 3-D object posture information for each of the orientation classes according to a joint probability distribution model based on single probability distribution models for the orientation classes, and calculates a conditional probability of the image feature in condition of the corresponding 3-D object posture information based on the joint probability. The joint probability distribution model is that described in the above with reference to the embodiment of Fig. 1. That is to say, for each assumed orientation class, the probability calculating unit 603 forms a joint feature $[X, Y]^T$ with the image feature X and the corresponding 3-D object posture information $Y$, and calculates the joint probability value $p([X, Y]^T)$ of the joint feature $[X, Y]^T$ with the joint probability distribution model. Based on the obtained joint probability value $p([X, Y]^T)$, the probability calculating unit 603 calculates a conditional probability $p(Y|X)$, i.e., $p(Y|X) = p([X, Y]^T) / \int p([X, Y]^T) dX$ according to the Bayesian theorem for example.
The estimating unit 604 estimates the orientation class corresponding to the maximum of the conditional probabilities $p(Y|X)$ calculated for all the possible orientation classes as the posture orientation of the object in the input image.

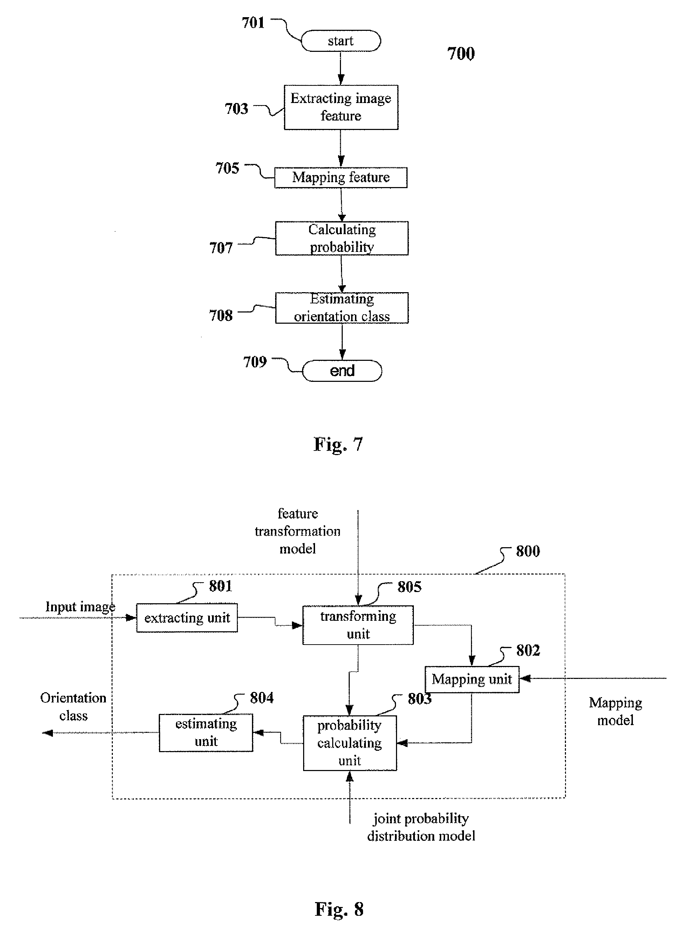

Fig. 7 is a flow chart illustrating a method 700 of estimating the posture orientation of an object in an image according to an embodiment of the present invention.
As shown in Fig. 7, the method 700 starts from step 701. At step 703, an image feature is extracted from an input image. The input image has the same specification as that of the input images described in the above with reference to the embodiment of Fig. 1. The image feature and the method of extracting the image feature are the same as the image features and the extracting method (as described in the above with reference to the embodiment of Fig. 1) which the adopted mapping model is based on.
At step 705, with respect to each of a plurality of orientation classes, 3-D object posture information corresponding to the image feature is obtained based on a mapping model corresponding to the orientation class, for mapping the image feature to the 3-D object posture information. The mapping model is that described in the above with reference to the embodiment of Fig. 1. Here, for an image feature $X_m$ extracted from the input image, where $m$ is the number of dimensions of the image feature, at step 705, it is assumed that all the orientation classes are possible for the input image. Accordingly, at step 705, with respect to each assumed orientation class, corresponding 3-D object posture information $Y_{p \times n} = A_{p \times m} \times X_m$ is obtained with the corresponding mapping model $A_{p \times m}$.

At step 707, a joint probability of a joint feature including the image feature and the corresponding 3-D object posture information for each of the orientation classes is calculated according to a joint probability distribution model based on single probability distribution models for the orientation classes, and a conditional probability of the image feature in condition of the corresponding 3-D object posture information is calculated based on the joint probability. The joint probability distribution model is that described in the above with reference to the embodiment of Fig. 1. That is to say, at step 707, for each assumed orientation class, a joint feature $[X, Y]^T$ is formed with the image feature X and the corresponding 3-D object posture information $Y,$ and the joint probability value $p([X, Y]^T)$ of the joint feature $[X, Y]^T$ is calculated with the joint probability distribution model. Based on the obtained joint probability value $p([X, Y]^T)$, a conditional probability $p(Y|X)$, i.e., $p(Y|X) = p([X, Y]^T)/\int p([X, Y]^T)dX$ is calculated according to the Bayesian theorem for example.

At step 708, the orientation class corresponding to the maximum of the conditional probabilities $p(Y|X)$ calculated for all the possible orientation classes is estimated as the posture orientation of the object in the input image. The method 700 ends at step 709.

Fig. 8 is a block diagram illustrating the structure of an apparatus 800 for estimating the posture orientation of an object in an image according to a preferable embodiment of the present invention.

As illustrated in Fig. 8, the apparatus 800 includes an extracting unit 801, a transforming unit 805, a mapping unit 802, a probability calculating unit 803 and an estimating unit 804. The extracting unit 801, the mapping unit 802, the probability calculating unit 803 and the estimating unit 804 have the same functions with the extracting unit 601, the mapping unit 602, the probability calculating unit 603 and the estimating unit 604 in the embodiment of Fig. 6 respectively, and will not be described in detail here. It is to be noted that, however, the extracting unit 801 is configured to output the extracted image feature to the transforming unit 805, and the image feature input into the mapping unit 802 and the probability calculating unit 803 is output from the transforming unit 805.

The transforming unit 805 transforms the image feature through a feature transformation model for dimension reduction to obtain the 3-D object posture information. The feature transformation model may be that described in the above with reference to the embodiment of Fig. 4.

In the above embodiment, because the image feature transformed with the feature transformation model has less dimensions, it is advantageous for reducing subsequent processing cost for mapping and calculation.

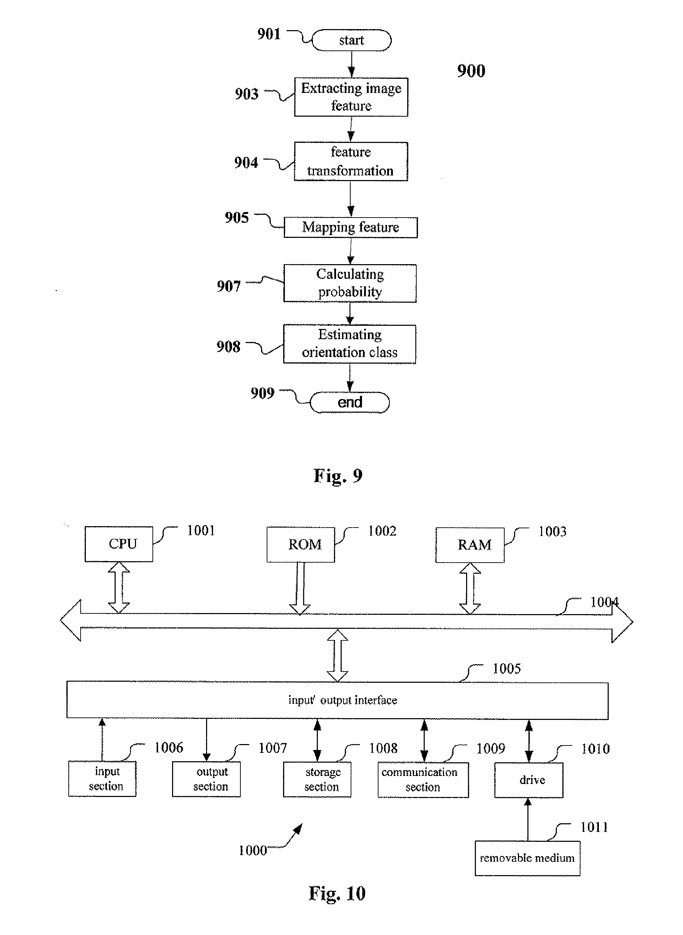

Fig. 9 is a flow chart illustrating a method 900 of estimating the posture orientation of an object in an image according to a preferable embodiment of the present invention.

As shown in Fig. 9, the method 900 starts from step 901. At step 903, as in step 703, an image feature is extracted from an input image.

At step 904, the image feature is transformed through a feature transformation model for dimension reduction to obtain the 3-D object posture information. The feature transformation model may be that described in the above with reference to the embodiment of Fig. 4.

At step 905, as in step 705, with respect to each of a plurality of orientation classes, 3-D object posture information corresponding to the image feature is obtained based on a mapping model corresponding to the orientation class, for mapping the image feature to the 3-D object posture information.

At step 907, as in step 707, a joint probability of a joint feature including the image feature and the corresponding 3-D object posture information for each of the orientation classes is calculated according to a joint probability distribution model based on single probability distribution models for the orientation classes, and a conditional probability of the image feature in condition of the corresponding 3-D object posture information is calculated based on the joint probability.

At step 908, as in step 708, the orientation class corresponding to the maximum of the conditional probabilities calculated for all the possible orientation classes is estimated as the posture orientation of the object in the input image. The method 900 ends at step 909.

Although the embodiments of the present invention are described with respect to images in the above, the embodiments of the present invention may also be applied to videos, where the videos are processed as sequences of images.

Fig. 10 is a block diagram showing the exemplary structure of a computer for implementing the embodiments of the present invention.

In Fig. 10, a central processing unit (CPU) 1001 performs various processes in accordance with a program stored in a read only memory (ROM) 1002 or a program loaded from a storage section 1008 to a random access memory (RAM) 1003. In the RAM 1003, data required when the CPU 1001 performs the various processes or the like is also stored as required.

The CPU 1001, the ROM 1002 and the RAM 1003 are connected to one another via a bus 1004. An input / output interface 1005 is also connected to the bus 1004.

The following components connected to input / output interface 1005: An input section 1006 including a keyboard, a mouse, or the like; An output section 1007 including a display such as a cathode ray tube (CRT), a liquid crystal display (LCD), or the like, and a loudspeaker or the like; The storage section 1008 including a hard disk or the like; and a communication section 1009 including a network interface card such as a LAN card, a modem, or the like. The communication section 1009 performs a communication process via the network such as the internet.

A drive 1010 is also connected to the input / output interface 1005 as required. A removable medium 1011, such as a magnetic disk, an optical disk, a magneto - optical disk, a semiconductor memory, or the like, is mounted on the drive 1010 as required, so that a computer program read therefrom is installed into the storage section 1008 as required.

In the case where the above - described steps and processes are implemented by the software, the program that constitutes the software is installed from the network such as the internet or the storage medium such as the removable medium 1011.

One skilled in the art should note that, this storage medium is not limit to the removable medium 1011 having the program stored therein as illustrated in figure 10, which is delivered separately from the approach for providing the program to the user. Examples of the removable medium 1011 include the magnetic disk, the optical disk (including a compact disk - read only memory (CD-ROM) and a digital versatile disk (DVD)), the magneto - optical disk (including a mini - disk (MD)), and the semiconductor memory. Alternatively, the storage medium may be ROM 1002, the hard disk contained in the storage section 1008, or the like, which have the program stored therein and is deliver to the user together with the method that containing them.

The present invention is described in the above by referring to specific embodiments. One skilled in the art should understand that various modifications and changes can be made without departing from the scope as set forth in the following claims.

**Claims**

1. A method of estimating a posture orientation of an obj ect in an image, comprising:

    extracting an image feature from an input image;
    with respect to each of a plurality of orientation classes, obtaining 3-D object posture information corresponding to the image feature based on a mapping model corresponding to the orientation class, for mapping the image feature to the 3-D object posture information;
    calculating a joint probability of a joint feature including the image feature and the corresponding 3-D object posture information for each of the orientation classes according to a joint probability distribution model based on single probability distribution models for the orientation classes;
    calculating a conditional probability of the image feature in condition of the corresponding 3-D object posture information based on the joint probability; and
    estimating the orientation class corresponding to the maximum of the conditional probabilities as the posture orientation of the object in the input image.

2. The method according to claim 1, further comprising:

    transforming the image feature through a feature transformation model for dimension reduction to obtain the 3-D object posture information.

3. The method according to claim 1 or 2, wherein the image feature is a statistical feature relating to edge orientations in the input image.

4. The method according to claim 1 or 2, wherein the joint probability distribution model is based on the Gaussian mixture model, the Hidden Markov Model or the Conditional Random Field.

5. An apparatus for estimating a posture orientation of an object in an image, comprising:

    an extracting unit which extracts an image feature from an input image;
    a mapping unit which, with respect to each of a plurality of orientation classes, obtains 3-D object posture information corresponding to the image feature based on a mapping model corresponding to the orientation class, for mapping the image feature to the 3-D object posture information;
    a probability calculating unit which calculates a joint probability of a joint feature including the image feature and the corresponding 3-D object posture information for each of the orientation classes according to a joint probability distribution model based on single probability distribution models for the orientation classes, and calculates a conditional probability of the image feature in condition of the corresponding 3-D object posture information based on the joint probability; and

an estimating unit which estimates the orientation class corresponding to the maximum of the conditional probabilities as the posture orientation of the object in the input image.

6. The apparatus according to claim 5, further comprising:

   a transforming unit which transforms the image feature through a feature transformation model for dimension reduction to obtain the 3-D object posture information.

7. The apparatus according to claim 5 or 6, wherein the image feature is a statistical feature relating to edge orientations in the input image.

8. The apparatus according to claim 5 or 6, wherein the joint probability distribution model is based on the Gaussian mixture model, the Hidden Markov Model or the Conditional Random Field.

**Fig. 1**

**Fig. 2**

301

start

300

303

Extracting image
feature

305

Estimating mapping
model

307

Calculating joint
probability
distribution model

309

end

**Fig. 3**

400

Input image

401

extracting unit

404

transformation model
calculating unit

feature
transformation model

405

feature
transforming unit

402

3-D object posture
information

joint probability
distribution model

probability model
calculating unit

403

map estimating
unit

Mapping model

3-D object
posture
information

**Fig. 4**

501 — start

500

502 — Extracting image feature

503 — Calculating feature transformation model

504 — feature transformation

505 — Estimating mapping model

507 — Calculating joint probability distribution model

509 — end

**Fig. 5**

Mapping model

600

image → 601 extracting unit → 602 Mapping unit

joint probability distribution model →

603 probability calculating unit

604 estimating unit → Orientation class

**Fig. 6**

14

701 — start

700

703 — Extracting image feature

705 — Mapping feature

707 — Calculating probability

708 — Estimating orientation class

709 — end

**Fig. 7**

feature transformation model

800

Input image → 801 extracting unit → 805 transforming unit

802 Mapping unit ← Mapping model

Orientation class ← 804 estimating unit ← 803 probability calculating unit

joint probability distribution model

**Fig. 8**

901 — ( start )

900

903 — Extracting image feature

904 — feature transformation

905 — Mapping feature

907 — Calculating probability

908 — Estimating orientation class

909 — ( end )

**Fig. 9**

1001 CPU

1002 ROM

1003 RAM

1004

1005

input/ output interface

1006 input section

1007 output section

1008 storage section

1009 communication section

1010 drive

1000

1011 removable medium

**Fig. 10**

| **INTERNATIONAL SEARCH REPORT** | International application No. |
|---|---|
| | PCT/CN2010/072150 |

**A. CLASSIFICATION OF SUBJECT MATTER**

G06T7/20(2006.01)i

According to International Patent Classification (IPC) or to both national classification and IPC

**B. FIELDS SEARCHED**

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

Database : EPDOC, WPI, CPRS, CNKI

Keywords: posture, predict, image, probability, 3-D, distribution, attitude

**C. DOCUMENTS CONSIDERED TO BE RELEVANT**

| Category* | Citation of document, with indication, where appropriate, of the relevant passages | Relevant to claim No. |
|---|---|---|
| A | CN101093582A (SONY CORP) 26 Dec. 2007(26.12.2007) the whole document | 1-8 |
| A | CN101048799A (HEWLETT-PACKARD DEV CO) 03 Oct. 2007(03.10.2007) the whole document | 1-8 |
| A | US2004091153A1 (MINOLTA CO LTD) 13 May 2004(13.05.2004) the whole document | 1-8 |
| A | US2008031492A1 (FOND KESSLER BRUNO) 07 Feb. 2008(07.02.2008) the whole document | 1-8 |

☐ Further documents are listed in the continuation of Box C.　　☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 20 Jul. 2010(20.07.2010) | **09 Sep. 2010 (09.09.2010)** |
| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br><br>WANG,Dan<br><br>Telephone No. (86-10)62412062 |

Form PCT/ISA /210 (second sheet) (July 2009)

## INTERNATIONAL SEARCH REPORT
### Information on patent family members

| | International application No. |
|---|---|
| | PCT/CN2010/072150 |

| Patent Documents referred in the Report | Publication Date | Patent Family | Publication Date |
|---|---|---|---|
| CN101093582A | 26.12.2007 | EP1870038A1 | 26.12.2007 |
| | | JP2007333690A | 27.12.2007 |
| | | US2008112592A1 2 | 15.05.2008 |
| | | KR20070120443A   4 | 24.12.2007 |
| | | JP4148281B2B2 | 10.09.2008 |
| | | EP1870038B1 | 13.05.2009 |
| | | DE602007001104E | 25.06.2009 |
| CN101048799A | 03.10.2007 | US2006088191A1 | 27.04.2006 |
| | | WO2006047769A1 | 04.05.2006 |
| | | EP1805716A1 | 11.07.2007 |
| | | KR20070068408A | 29.06.2007 |
| | | JP2008518331T | 29.05.2008 |
| | | US7447337B2 | 04.11.2008 |
| | | KR100901904B1 | 10.06.2009 |
| | | CN100538743C | 09.09.2009 |
| US2004091153A1 | 13.05.2004 | JP2004206656A | 22.07.2004 |
| | | US7483548B2 | 27.01.2009 |
| | | JP4318465B2 | 26.08.2009 |
| US2008031492A1 | 07.02.2008 | EP1879149A1 | 16.01.2008 |

Form PCT/ISA /210 (patent family annex) (July 2009)